# EUROPÄISCHE PATENTSCHRIFT

(11) **EP 0 531 713 B1**
(45) Veröffentlichungstag und Bekanntmachung des Hinweises auf die Patenterteilung: **03.05.1995**
(21) Anmeldenummer: 92113458.1
(22) Anmeldetag: 07.08.1992
(51) Int. Cl.: D21H 17/14, D21H 21/12

(54) **Entschäumer für die Papierindustrie auf der Basis von Öl-in-Wasser-Emulsionen**
Antifoams for paper industry based on emulsions of oil in water
Antimousse pour l'industrie du papier à base d'émulsions huile dans l'eau

(30) Priorität: 22.08.1991 DE 4127719
(43) Veröffentlichungstag der Anmeldung: 17.03.1993
(73) Patentinhaber: BASF Aktiengesellschaft, 67063 Ludwigshafen (DE)
(72) Erfinder: Wegner, Brigitte, Dr., W-6720 Speyer (DE); Oppenlaender, Knut, Dr., W-6700 Ludwigshafen (DE); Schuhmacher, Rudolf, Dr., W-6737 Boehl-Iggelheim (DE); Hohmann, Andreas, Dr., W-6700 Ludwigshafen (DE); Dralle, Gabriele, Dr., W-6700 Ludwigshafen (DE)

(56) Entgegenhaltungen:
- DATABASE WPIL,no.81-12382D, Derwent Publications Ltd,London,GB;& JP-A-55159810 (HARIMA KASEI)13-12-1980

## Beschreibung

Die Erfindung betrifft Entschäumer für die Papierindustrie auf der Basis von Öl-in-Wasser-Emulsionen, bei denen die Öl-phase zu 5 bis 50 Gew.-% am Aufbau der Emulsion beteiligt ist, und aus einer Kombination von bekannten Entschäumern, wie beispielsweise langkettigen Alkoholen oder Fettsäureestern von C₁₂- bis C₂₂-Carbonsäuren und ein- bis dreiwertigen Alkoholen, mit Polyglycerinestern als wesentliche Komponenten enthält.

Aus der US-A-4 950 420 sind Entschäumer für die Papierindustrie bekannt, die 10 bis 90 Gew.-% eines oberflächenaktiven Polyethers, wie polyoxalkyliertes Glycerin oder polyalkoxylierten Sorbit und 10 bis 90 Gew.-% eines Fettsäureesters von mehrwertigen Alkoholen, wie Mono- und Diester von Polyethylenglykol oder Polypropylenglykol enthalten. Diese Entschäumer sind frei von irgendwelchen Ölen, Amiden oder hydrophobiertem Siliciumdioxid oder Silikonölen.

Aus der EP-A-0 149 812 ist bekannt, Entschäumer auf Basis von Öl-in-Wasser-Emulsionen, bei denen die Ölphase der Emulsion
(a) einen C₁₂- bis C₂₆-Alkohol, Destillationsrückstände, die bei der Herstellung von Alkoholen mit einer höheren Kohlenstoffzahl durch Oxosynthese oder nach dem Ziegler-Verfahren erhalten worden und gegebenenfalls noch alkoxyliert sind und/oder
(b) einen Fettsäureester von C₁₂- bis C₂₂-Carbonsäuren mit einem ein- bis dreiwertigen C₁- bis C₁₈-Alkohol und gegebenenfalls
(c) einen Kohlenwasserstoff mit einem Siedepunkt oberhalb von 200°C oder Fettsäuren mit 12 bis 22 Kohlenstoffatomen
enthält, zu 15 bis 60 Gew.-% am Aufbau der Emulsion beteiligt ist und eine mittlere Teilchengröße von 0,5 bis 15 »m hat, durch Zusatz von 0,05 bis 0,5 Gew.-% eines hochmolekularen, wasserlöslichen Homo- oder Copolymerisats von Acrylsäure, Methacrylsäure, Acrylamid oder Methacrylamid gegen Viskositätserhöhung und Aufrahmen bei der Lagerung zu stabilisieren.

Aus der JP-A-60/083559 und der JP-A-61/227756 ist die Verwendung von Polyglycerinfettsäureestern als Schaumdämpfer bei der Herstellung von Lebensmitteln, wie z.B. Tofu, bekannt. Diese Formulierungen enthalten keine Fettalkohole; die Anwesenheit von Erdalkalisalzen ist jedoch essentiell. Entschäumerformulierungen besitzen bekanntermaßen nur in dem Anwendungsbereich eine gute Wirksamkeit, für den sie entwickelt worden sind, z.B. Textilindustrie, Lebensmittelindustrie, Papierindustrie, Lack- und Lederindustrie. Wegen dieser spezifischen Wirksamkeit ist eine erfolgreiche Übertragung bzw. Anwendung von Entschäumern in anderen Bereichen nicht gegeben.

Bekanntlich verlieren Entschäumer auf Basis von Öl-in-Wasser-Emulsionen, die üblicherweise bei der Herstellung von Papier eingesetzt werden, an Wirksamkeit, wenn die Temperatur des zu entschäumenden wäßrigen Systems auf über 35°C ansteigt. Bei Temperaturen, die oberhalb von 50°C liegen, tritt dann bei Einsatz der bekannten Öl-in-Wasser-Emulsionen ein noch schnellerer Abfall der Wirksamkeit der Entschäumer ein. Da die Wasserkreisläufe in den Papierfabriken immer häufiger geschlossen werden, resultiert daraus ein Temperaturanstieg des im Kreislauf geführten Wassers bei der Papierherstellung, so daß die Wirksamkeit der bisher verwendeten Entschäumer deutlich absinkt.

Aus der EP-A-0 322 830 sind Entschäumer auf Basis von Öl-in-Wasser-Emulsionen bekannt, bei denen die Ölphase der Emulsionen
(a) einen C₁₂- bis C₂₆-Alkohol, Destillationsrückstände, die bei der Herstellung von Alkoholen mit einer höheren Kohlenstoffzahl durch Oxosynthese oder nach dem Ziegler-Verfahren erhältlich und die gegebenenfalls noch alkoxyliert sind und/oder
(b) einen Fettsäureester von C₁₂- bis C₂₂-Carbonsäuren mit einem ein- bis dreiwertigen C₁- bis C₁₈-Alkohol und gegebenenfalls
(c) einen Kohlenwasserstoff mit einem Siedepunkt oberhalb von 200°C oder Fettsäuren mit 12 bis 22 Kohlenstoffatomen
enthält, zu 5 bis 50 Gew.-% am Aufbau der Emulsion beteiligt ist und eine mittlere Teilchengröße von < 25 »m hat und bei der 5 bis 50 Gew.-% der Komponenten (a) und (b) der Ölphase der Öl-in-Wasser-Emulsionen durch
(d) mindestens eine, bei einer Temperatur oberhalb von 70° schmelzenden Verbindung aus der Gruppe der Fettalkohole mit mindestens 28 C-Atomen, der Ester aus einer C₁- bis C₂₂-Carbonsäure mit einem mindestens 28 C-Atome aufweisenden Alkohol, der Addukte von C₂- bis C₄-Alkylenoxiden an mindestens 28 C-Atome enthaltende Alkohole, der Polyethylenwachse mit einem Molekulargewicht von mindestens 2000, der Carnaubawachse, der Montanesterwachse und der Montansäurewachse sowie deren Salze ersetzt sind.

Die Öl-in-Wasser-Emulsionen sind auch bei Temperaturen oberhalb von 35°C, z.B. in dem Temperaturbereich von 50 bis 60°C, wirksame Entschäumer bei der Herstellung von Papier.

Der vorliegenden Erfindung liegt die Aufgabe zugrunde, für die Papierindustrie Entschäumer zur Verfügung zu stellen, die bei Temperaturen von 50°C und darüber mindestens so wirksam sind wie die bisher dafür verwendeten Produkte bzw. diese in der Wirksamkeit noch übertreffen.

Die Aufgabe wird erfindungsgemäß gelöst mit Entschäumern für die Papierindustrie auf der Basis von Öl-in-Wasser-Emulsionen, bei denen die Ölphase zu 5 bis 50 Gew.-% am Aufbau der Emulsion beteiligt ist, wenn die Ölphase der Emulsionen
(a) einen Alkohol mit mindestens 12 C-Atomen, Fettsäureester aus Alkoholen mit mindestens 22 C-Atomen und C₁- bis C₃₆-Carbonsäuren, Destillationsrückstände, die bei der Herstellung von Alkoholen mit einer höheren Kohlenstoffzahl durch Oxosynthese oder nach dem Ziegler-Verfahren erhältlich und die gegebenenfalls noch alkoxyliert sind, Mischungen der genannten Verbindungen und/oder
(b) einen Fettsäureester von C₁₂- bis C₂₂-Carbonsäuren mit einem ein- bis dreiwertigen C₁- bis C₁₈-Alkohol und gegebenenfalls
(c) einen Kohlenwasserstoff mit einem Siedepunkt oberhalb von 200°C oder Fettsäuren mit 12 bis 22 Kohlenstoffatomen
in Kombination mit
(d) 1 bis 80 Gew.-% Polyglycerinestern enthält, die durch mindestens 20 %ige Veresterung von Polyglycerinmischungen aus
   0 bis 10 Gew.-% Monoglycerin,
   15 bis 40 Gew.-% Diglycerin,
   30 bis 55 Gew.-% Triglycerin,
   10 bis 25 Gew.-% Tetraglycerin,
   0 bis 15 Gew.-% Pentaglycerin,
   0 bis 10 Gew.-% Hexaglycerin und
   0 bis 5 Gew.-% höherkondensierten Polyglycerinen
   mit mindestens einer Fettsäure mit 12 bis 36 C-Atomen erhältlich sind.

Diese Entschäumer werden zur Schaumbekämpfung bei der Zellstoffkochung, der Mahlung von Papierstoff, der Papierherstellung und der Dispergierung von Pigmenten für die Papierherstellung in Mengen von 0,02 bis 0,5 Gew.-Teilen pro 100 Gew.-Teile des schaumbildenden Mediums verwendet. In Papierstoffen wirken sie außerdem in den angegebenen Mengen als Entlüfter.

Als Komponente (a) der Öl-in-Wasser-Emulsionen setzt man vor allem Alkohole mit mindestens 12 C-Atomen oder Mischungen von Alkoholen ein. Es handelt sich hierbei in aller Regel um einwertige Alkohole, die bis zu 48 C-Atome im Molekül enthalten. Solche Produkte sind im Handel erhältlich. Es können jedoch auch solche Fettalkohole als Komponente (a) eingesetzt werden, die eine wesentliche höhere Anzahl von Kohlenstoffatomen im Molekül enthalten. Bei den Alkoholen der Komponente (a) handelt es sich entweder um natürliche oder um synthetische Alkohole. Beispielsweise eignen sich Laurylalkohol, Myristylalkohol, Cetylalkohol, Palmitylalkohol, Stearylalkohol, Behenylalkohol, Oleylalkohol, Ricinolalkohol, Linoleylalkohol und Erucaalkohol.

Als Komponente (a) kann man auch Mischungen von Alkoholen einsetzen, z.B. Mischungen aus (1) Alkoholen mit 12 bis 26 C-Atomen und (2) Alkoholen mit 28 bis 48 C-Atomen.

Die synthetischen Alkohole, die beispielsweise nach dem Ziegler-Verfahren durch Oxidation von Aluminiumalkylen erhältlich sind, sind gesättigte, geradkettige unverzweigte Alkohole. Synthetische Alkohole werden auch durch Oxosynthese erhalten. Hierbei fallen in aller Regel Alkoholgemische an. Als Komponente (a) der Ölphase der Entschäumeremulsionen können außerdem Destillationsrückstände verwendet werden, die bei der Herstellung der vorstehend genannten Alkohole durch Oxosynthese oder nach dem Ziegler-Verfahren erhalten werden. Als Bestandteil (a) der Ölphase der Entschäumeremulsionen eignen sich auch alkoxylierte Destillationsrückstände, die bei den obengenannten Verfahren zur Herstellung von höheren Alkoholen durch Oxosynthese oder nach dem Ziegler-Verfahren anfallen. Man erhält die oxalkylierten Destillationsrückstände dadurch, daß man die Destillationsrückstände mit Ethylenoxid oder mit Propylenoxid oder auch mit einer Mischung aus Ethylenoxid und Propylenoxid nach bekannten Verfahren der Alkoxylierung unterwirft. Pro OH-Gruppe des Alkohols im Destillationsrückstand werden bis zu 5 Ethylenoxid- bzw. Propylenoxidgruppen angelagert. Vorzugsweise addiert man pro OH-Gruppe des Alkohols im Destillationsrückstand 1 bis 2 Ethylenoxidgruppen.

Als Komponente (a) eignen sich auch Fettsäureester aus Alkoholen mit mindestens 22 C-Atomen und C₁- bis C₃₆-Carbonsäuren, z.B. Montanwachse oder Carnaubawachse.

Die obengenannten Verbindungen der Komponente (a) können entweder allein oder in Mischung untereinander in beliebigen Verhältnissen als Bestandteil der Komponente (a) die Ölphase der Öl-in-Wasser-Emulsionen bilden.

Als Komponente (b) der Ölphase der Entschäumer-Emulsion verwendet man Fettsäureester von C₁₂- bis C₂₂-Carbonsäuren mit einem ein- bis dreiwertigen C₁- bis C₁₈-Alkohol. Die Fettsäuren, die den Estern zugrundeliegen, sind beispielsweise Laurinsäure, Myristinsäure, Palmitinsäure, Stearinsäure, Arachinsäure und Behensäure. Vorzugsweise verwendet man zur Herstellung der Ester Palmitinsäure oder Stearinsäure. Man kann einwertige C₁- bis C₁₈-Alkohole zur Veresterung der genannten Carbonsäuren verwenden, z.B. Methanol, Ethanol, Propanol, Butanol, Hexanol, Decanol und Stearylalkohol als auch zweiwertige Alkohole, wie Ethylenglykol oder dreiwertige Alkohole wie Glycerin. Die mehrwertigen Alkohole können vollständig oder teilweise verestert sein.

Die Ölphase der Emulsion kann zusätzlich noch von einer weiteren Klasse wasserunlöslicher Verbindungen gebildet werden, die im folgenden als Komponente (c) bezeichnet wird. Die Verbindungen der Komponente (c) können bis zu 50 Gew.-%, bezogen auf die Komponenten (a) und (b) am Aufbau der Ölphase der Entschäumeremulsionen beteiligt sein. Sie können entweder einer Mischung aus den Komponenten (a) und (b) oder jeder der unter (a) oder (b) genannten Verbindungen zugesetzt werden. Als Komponente (c) eignen sich Kohlenwasserstoffe mit einem Siedepunkt bei 1013 mbar von mehr als 200°C und einem Stockpunkt unter 0°C oder Fettsäuren mit 12 bis 22 Kohlenstoffatomen. Vorzugsweise eignen sich als Kohlenwasserstoffe Paraffinöle, wie die im Handel üblichen Paraffingemische, die auch als Weißöl bezeichnet werden.

Die Komponente (a) und (b) können in jedem beliebigen Verhältnis zur Herstellung der Entschäumer-Emulsionen verwendet werden. Jede dieser beiden Komponenten kann entweder allein oder in Mischung mit der anderen in den Entschäumern enthalten sein. In der Praxis haben sich beispielsweise Mischungen aus (a) und (b) bewährt, die 40 bis 60 Gew.-% der Komponente (a) und 60 bis 40 Gew.-% der Komponente (b) enthalten. Die Ölphase der Öl-in-Wasser-Emulsionen kann gegebenenfalls noch zusätzlich mindestens eine Verbindung (c) enthalten. Wesentlich ist jedoch, daß mindestens eine der oben angegebenen Komponenten (a) oder (b) in Kombination mit mindestens einer Verbindung der nachstehend angegebenen Gruppe (d) die Ölphase der Öl-in-Wasser-Emulsionen bildet. Die Verbindungen (d) sind in einer Menge von 1 bis 80, vorzugsweise 5 bis 20 Gew.-% am Aufbau der Ölphase der Öl-in-Wasser-Emulsionen beteiligt. Das bedeutet, daß die Ölphase der Entschäumer-Emulsionen notwendigerweise folgende Kombinationen enthält: (a) und (d), (b) und (d) sowie (a), (b) und (d). Die Verbindungen der Komponente (c) können gegebenenfalls bei allen drei oben aufgeführten Kombinationen der Zusammensetzung der Ölphase in Mengen bis zu 40 Gew.-%, bezogen auf die Ölphase der Öl-in-Wasser-Emulsionen, verwendet werden.

Als Komponenten (d) der Ölphase kommen Polyglycerinester in Betracht, die durch mindestens 20 %ige Veresterung von Polyglycerinmischungen aus
0 bis 10 Gew.-% Glycerin,
15 bis 40 Gew.-% Diglycerin,
30 bis 55 Gew.-% Triglycerin,
10 bis 25 Gew.-% Tetraglycerin,
0 bis 15 Gew.-% Pentaglycerin,
0 bis 10 Gew.-% Hexaglycerin und
0 bis 5 Gew.-% höherkondensierten Polyglycerinen
mit mindestens einer Fettsäure mit 12 bis 36 C-Atomen im Molekül erhältlich sind. Die oben beschriebenen Polyglycerinmischungen werden bevorzugt mit 16 bis 30 C-Atomen enthaltenen Fettsäuren verestert. Der Veresterungsgrad beträgt 20 bis 100, vorzugsweise 60 bis 100 %. Bei den für die Veresterung der Polyglycerinmischungen in Betracht kommenden Fettsäuren kann es sich um gesättigte Fettsäuren als auch um ungesättigte Fettsäuren handeln. Für die Veresterung der Polyglycerinmischungen geeignete Fettsäuren sind beispielsweise Laurinsäure, Myristinsäure, Palmitinsäure, Stearinsäure, Arachinsäure, Behensäure und Montanwachssäure. Für die Veresterung der Polyglycerinmischungen kommen auch ethylenisch ungesättigte Fettsäuren in Betracht, z.B. Ölsäure, Hexadecensäuren, Elaidinsäure, Eicosensäuren und Docosensäuren wie Erucasäure oder Brassidinsäure sowie mehrfach ungesättigte Säuren, wie Octadecendiensäuren und Octatriensäuren, wie Linolsäure und Linolensäure sowie Mischungen der genannten gesättigten und ungesättigten Carbonsäuren.

Die Polyglycerinmischungen sind beispielsweise durch alkalisch katalysierte Kondensation von Glycerin bei erhöhten Temperaturen (vgl. z.B. Fette, Seifen, Anstrichmittel, 88 Jahrgang, Nr. 3, Seiten 101 bis 106 (1986) oder gemäß der DE-A 3 842 692) durch Umsetzung von Glycerin mit Epichlorhydrin in Gegenwart von sauren Katalysatoren bei erhöhten Temperaturen zugänglich. Die Mischungen sind aber auch dadurch erhältlich, daß man die reinen Polyglycerinkomponenten, z.B. Diglycerin, Triglycerin und Tetraglycerin miteinander mischt. Die zu mindestens 20 % veresterten Polyglycerinmischungen werden durch Verestern der Polyglycerinmischungen mit der gewünschten Fettsäure oder Mischung von Fettsäuren nach bekannten Verfahren hergestellt. Hierbei arbeitet man in der Regel in Gegenwart eines sauren Veresterungskatalysators wie Schwefelsäure, p-Toluolsulfonsäure, Zitronensäure, phosphoriger Säure, Phosphorsäure, hypophosphoriger Säure oder basischer Katalysatoren, wie Natriummethylat oder Kalium-tert.-butylat.

Die Verbindungen der Komponente (d) sind zu 1 bis 80, vorzugsweise 5 bis 20 Gew.-% in der Ölphase enthalten. Die Ölphase ist zu 5 bis 50 Gew.-% am Aufbau der Öl-in-Wasser-Emulsionen beteiligt, während der Anteil der wäßrigen Phase am Aufbau der Emulsionen 95 bis 50 Gew.-% beträgt, wobei sich die Gewichtsprozente jeweils zu 100 addieren.

Die Ölphase wird in die wäßrige Phase einemulgiert. Hierfür benötigt man Vorrichtungen, in denen die Komponenten der Emulsion einem starken Schergefälle unterworfen werden, z.B. Dispergatoren. Um besonders stabile Öl-in-Wasser-Emulsionen zu erhalten, führt man die Emulgierung der Ölphase in der wäßrigen Phase vorzugsweise in Gegenwart von grenzflächenaktiven Stoffen durch, die einen HLB-Wert von mehr als 6 haben (zur Definition des HLB-Werts vgl. W.C. Griffin, Journal of the Society of Cosmetic Chemists, Band 5, Seiten 249 bis 256 (1954)). Bei den grenzflächenaktiven Stoffen handelt es sich um Öl-in-Wasser-Emulgatoren bzw. um typische Netzmittel. Von den grenzflächenaktiven Stoffen kann man anionische, kationische oder nichtionische Verbindungen verwenden, bzw. Mischungen dieser Verbindungen, die miteinander verträglich sind z.B. Mischungen aus anionischen und nichtionischen oder kationischen und nichtionischen Netzmitteln. Stoffe der genannten Art sind beispielsweise Natrium- oder Ammoniumsalze höherer Fettsäuren, wie Ammoniumoleat oder Ammoniumstearat, oxalkylierte Alkylphenole, wie Nonylphenol oder Isooctylphenol, die im Molverhältnis 1 zu 2 bis 1 zu 50 mit Ethylenoxid umgesetzt sind, oxethylierte ungesättigte Öle, z.B. die Reaktionsprodukte aus einem Mol Rizinusöl und 30 bis 40 Mol Ethylenoxid oder die Umsetzungsprodukte aus einem Mol Spermalkohol mit 60 bis 80 Mol Ethylenoxid. Als Emulgatoren werden auch vorzugsweise sulfierte Oxethylierungsprodukte von Nonylphenol oder Octylphenol eingesetzt, die als Natrium- oder Ammoniumsalz der entsprechenden Schwefelsäurehalbester vorliegen. 100 Gew.-Teile der Öl-in-Wasser-Emulsionen enthalten üblicherweise 0,1 bis 5 Gew.-Teile eines Emulgators oder eines Emulgatorgemisches. Außer dem bereits genannten Emulgatoren kann man noch Schutzkolloide, wie hochmolekulare Polysaccharide und Seifen oder andere übliche Zusatzstoffe wie Stabilisatoren bei der Herstellung der Öl-in-Wasser-Emulsionen einsetzen. So hat sich beispielsweise ein Zusatz von 0,05 bis 0,5 Gew.-%, bezogen auf die gesamte Emulsion an hochmolekularen, wasserlöslichen Homo- und Copolymerisaten von Acrylsäure, Methacrylsäure, Acrylamid oder Methacrylamid als Stabilisator bewährt. Die Verwendung solcher Stabilisatoren ist beispielsweise Gegenstand der EP-A 0 149 812.

Durch das Einemulgieren der Ölphase in die wäßrige Phase erhält man Öl-in-Wasser-Emulsionen, die unmittelbar nach der Herstellung eine Viskosität in dem Bereich von 300 bis 3000 mPas aufweisen und die eine mittlere Teilchengröße der Ölphase von unterhalb 25 »m, vorzugsweise in dem Bereich von 0,5 bis 15 »m haben.

Obwohl die Verbindungen der Komponente (d) allein oder in Mischung mit der Komponente (c) praktisch keine Wirksamkeit als Öl-in-Wasser-Emulsionsentschäumer aufweisen, tritt überraschenderweise bei Kombination einer Verbindung der Komponente (d) mit Verbindungen (a) und/oder (b) ein synergistischer Effekt auf, der bei der Kombination (a) mit (d) und (a) mit (b) und (d) am stärksten ausgeprägt ist. Der Zusatz der Komponente (d) zu der Ölphase von Entschäumern, die die Komponente (a) und/oder (b) und gegebenenfalls noch weitere Bestandteile in emulgierter Form enthalten, verschlechtert die Wirksamkeit der so erhältlichen Entschäumer bei tieferen Temperaturen, z.B. bei Raumtemperatur nicht oder nur geringfügig, erhöht jedoch die Wirksamkeit dieser Entschäumer in wäßrigen Systemen, deren Temperatur oberhalb von 40°C liegt in einem unerwarteten Ausmaß. Die erfindungsgemäßen Öl-in-Wasser-Emulsionen werden in der Papierindustrie in wäßrigen Systemen eingesetzt, bei denen die Entstehung von Schaum bei höheren Temperaturen bekämpft werden muß, z.B. bei der Zellstoffkochung, der Mahlung von Papierstoff, der Papierherstellung bei geschlossenen Wasserkreisläufen von Papiermaschinen und der Dispergierung von Pigmenten für die Papierherstellung. Bezogen auf 100 Gew.-Teile Papierstoff in einem schaumbildenden Medium verwendet man 0,02 bis 0,5, vorzugsweise 0,05 bis 0,3 Gew.-Teile der Öl-in-Wasser-Entschäumer-Emulsion. Die Entschäumer bewirken außerdem beim Zusatz zu einer Papierstoffsuspension eine Entlüftung und werden daher auch als Entlüfter bei der Papierherstellung (Zusatz zum Papierstoff) verwendet. Sie eignen sich außerdem als Entschäumer bei der Papierbeschichtung, wo sie Papierstreichfarben zugesetzt werden. Die Entschäumer können auch in der Nahrungsmittelindustrie, der Stärkeindustrie sowie in Kläranlagen bei der Schaumbekämpfung verwendet werden. Sofern sie dem Papierstoff als Entlüfter zugesetzt werden, betragen die dafür angewendeten Mengen 0,02 bis 0,5 Gew.-Teile pro 100 Gew.-Teile Papierstoff.

Die in den Beispielen angegebenen Teile sind Gew.-Teile. Die Prozentangaben beziehen sich auf das Gewicht der Stoffe. Die mittlere Teilchengröße der in Wasser emulgierten Teilchen der Ölphase wurde mit Hilfe eines Coulter-Counters bestimmt. Der K-Wert von Polymerisaten wurde nach H. Fikentscher, Cellulose-Chemie, Band 13, 58 bis 64 und 71 bis 74 (1932) in wäßriger Lösung bei einer Temperatur von 25°C und einer Konzentration von 0,5 Gew.-% bei pH 7 bestimmt.

Bestimmung des Schaumwertes:
In einer Rinne aus einem durchsichtigen Kunststoff werden jeweils 5 l einer schaumentwickelnden Papierstoffsuspension 0,1 % (Holzschliff) 5 Minuten umgepumpt. Die an der Oberfläche der Stoffsuspension gebildete Schaummenge wird dann mit Hilfe eines Rasters an der Wand der Rinne in Flächeneinheiten (cm²) gemessen und als sogenannter Schaumwert zur Beurteilung der Wirksamkeit eines Entschäumers angegeben.

Pumpt man die Papierstoffsuspension in Abwesenheit eines Entschäumers 5 Minuten um, so erhält man einen Schaumwert von 1200 bis 1250 cm². Durch die Zugabe von jeweils 2 mg/l eines wirksamen Entschäumers (insgesamt 10 mg fest) zu der Papierstoffsuspension wird dieser Wert deutlich reduziert, so daß er ein Maß für die Wirksamkeit eines Entschäumers darstellt.

Prüfung der Entschäumer:
Die Temperatur der Papierstoffsuspension beträgt je nach Prüfung 30, 40, 50 oder 60°C, wobei die Temperatur während der 5-minütigen Prüfung auf ± 1°C konstant gehalten wird.

Da der Schaumnullwert bei 30, 40, 50 und 60°C unterschiedlich ist, wird die Wirksamkeit eines Entschäumers als Prozent Restschaum dargestellt.

Der Prozent-Restschaum (R) wird berechnet als 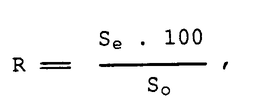
wobei Sₑ der Schaumwert bedeutet, der nach Zugabe eines Entschäumers und Sₒ der Schaumnullwert ist, d.h. der Wert, der in Abwesenheit eines Entschäumers gemessen wird. In dieser Terminologie ist der Entschäumer um so besser je kleiner R ist.

### Beispiel 1

Mit Hilfe eines Dispergators wird eine Öl-in-Wasser-Emulsion hergestellt, bei der die Ölphase zu 30 Gew.-% am Aufbau der Emulsion beteiligt ist und eine mittlere Teilchengröße von 3 bis 10 »m hat.

Die Ölphase besteht aus folgenden Komponenten:
(a) 21 Teilen eines Fettalkoholgemisches von C₁₂- bis C₂₆-Alkoholen
(b) 5 Teile Glycerintriester von C₁₆- bis C₁₈-Fettsäuren
(c) 1 Teil eines Mineralöls (handelsübliches Weißöl) und
(d) 2 Teile eines Polyglycerinesters, der erhältlich ist durch Verestern eines Polyglyceringemisches aus
   27 % Diglycerin,
   44 % Triglycerin,
   19 % Tetraglycerin und
   10 % höher kondensierten Polyglycerinen
   mit einem C₁₂- bis C₂₆-Fettsäuregemisch. Der Veresterungsgrad beträgt 60 %.

Die Wasserphase besteht aus:
65 Teilen Wasser,
3 Teilen eines Emulgators, der erhältlich ist durch Anlagerung von 25 Mol Ethylenoxid an 1 Mol Isooctylphenol und Verestern des Anlagerungsproduktes mit Schwefelsäure zum Halbester,
1 Teil eines Copolymerisats aus 70 % Acrylamid und 30 % Acrylsäure vom K-Wert 270 und
0,2 Teilen Natronlauge.

Die Komponenten (a) bis (d) werden zunächst bis auf eine Temperatur von 110°C erhitzt und dann in die 80°C warme wäßrige Phase unter Dispergieren zugefügt. Die so erhältliche Öl-in-Wasser-Emulsion hat bei einer Temperatur von 20°C unmittelbar nach der Herstellung eine Viskosität von 2650 mPa.s. Die Wirksamkeit dieser Entschäumeremulsion wird, wie oben beschrieben, an einer Papierstoffsuspension getestet. Für den Restschaumwert R in Prozent erhält man bei den jeweils für die Papierstoffsuspension verwendeten Temperaturen folgende Ergebnisse:

| T (°C) | R (%) |
|---|---|
| 30 | 22 |
| 50 | 11 |
| 60 | 26 |

### Vergleichsbeispiel 1

Man stellt eine Öl-in-Wasser-Emulsion nach der im Beispiel 1 angegebenen Vorschrift mit der Ausnahme her, daß man die Komponente (d) fortläßt und den Anteil des Fettalkoholgemisches der Komponente (a) auf 23 Teile erhöht. Man erhält eine Emulsion, deren Viskosität unmittelbar nach der Herstellung 540 mPa.s bei 20°C beträgt. Bei der Prüfung dieser Emulsion ergeben sich für die in der Tabelle angegebenen Temperaturen der Papierstoffsuspension folgende Restschaumwerte in Prozent:

| T (°C) | R (%) |
|---|---|
| 30 | 17 |
| 50 | 42 |
| 60 | 68 |

Vergleicht man diese Werte mit dem Restschaum gemäß Beispiel 1, so sieht man, daß der Schaumwert der Vergleichsemulsion bei 30°C etwas besser ist als derjenige der Emulsion gemäß Beispiel 1. Wird die Temperatur der Papierstoffsuspension bei der Prüfung jedoch auf 50 bzw. 60°C erhöht, so wird die Überlegenheit der erfindungsgemäßen Emulsion gegenüber der Emulsion nach Vergleichsbeispiel 1 deutlich. Bei 60°C ist die erfindungsgemäße Emulsion mehr als doppelt so wirksam wie die Emulsion gemäß Vergleichsbeispiel 1.

### Beispiel 2

Mehrere Öl-in-Wasser-Emulsionen, die alle die folgende gleiche qualitative Zusammensetzung hatten, werden mit der in Tabelle 1 angegebenen quantitativen Zusammensetzung der Ölphase hergestellt:
(a) Fettalkoholgemisch von C₁₂- bis C₂₆-Alkoholen,
(b) Glycerintriester von C₁₆- bis C₁₈-Fettsäuren
(d) Polyglycerinester hergestellt durch 55%ige Veresterung eines Polyglyceringemisches aus
   27 % Diglycerin,
   44 % Triglycerin,
   19 % Tetraglycerin und
   10 % höher kondensierten Polyglycerinen
   mit C₁₂- bis C₂₆-Fettsäuren.

Im Gegensatz zu der Emulsion gemäß Beispiel 1 wurde die wäßrige Phase auf pH-6,5 eingestellt. Diese Änderung führt zu einer deutlichen Viskositätserniedrigung der Emulsionen.

| Beispiel | Zusammensetzung der Ölphase [Teile] | | | Viskosität | Restschaum R % bei | |
|---|---|---|---|---|---|---|
| | (a) | (b) | (d) | | 30°C | 50°C |
| 2.1 | 23,0 | 6,2 | 1 | 370 | 27 | 15 |
| 2.2 | 22,0 | 6,2 | 2 | 390 | 23 | 9 |
| 2.3 | 21,0 | 6,2 | 3 | 460 | 28 | 12 |
| 2.4 | 4,0 | 24,2 | 2 | 290 | 36 | 17 |

### Beispiel 3

Nach der im Beispiel 2 angegebenen Vorschrift wird eine Emulsion hergestellt, wobei die wäßrige Phase gemäß Beispiel 1 unverändert bleibt und die Ölphase des Entschäumers folgende Zusammensetzung aufweist:
(a) 22,0 Teile eines Fettalkoholgemisches aus C₁₂- bis C₂₆-Alkoholen
(b) 6,2 Teile eines Glycerintriesters von C₁₆- bis C₁₈-Fettsäuren und
(d) 2 Teile Polyglycerinester, der durch Verestern eines Polyglyceringemisches aus
   27 % Diglycerin,
   44 % Triglycerin,
   19 % Tetraglycerin
   10 % höher kondensierten Polyglycerinen
   mit einer Montanwachssäure im Verhältnis 1:3 hergestellt wurde. Der Veresterungsgrad betrug 60 %.

Die Viskosität dieser Emulsion liegt unmittelbar nach der Herstellung bei 2930 mPa.s. Die Prüfung der Emulsion als Entschäumer erfolgte nach der oben beschriebenen Methode und ergab folgende Werte

| T (°C) | R (%) |
|---|---|
| 30 | 20 |
| 50 | 11 |
| 60 | 25 |

### Beispiel 4

Nach der im Beispiel 2 angegebenen Vorschrift wird eine Emulsion hergestellt, wobei die wäßrige Phase gemäß Beispiel 1 unverändert bleibt und die Ölphase des Entschäumers folgende Zusmmensetzung aufweist:
(a) 22,0 Teile eines Fettalkoholgemisches aus C₁₂- bis C₂₆-Alkoholen
(b) 6,2 Teile eines Glycerintriesters von C₁₆- bis C₁₈-Fettsäuren und
(d) 2 Teile Polyglycerinester, der durch Veresterung eines Polyglyceringemisches aus
   27 % Diglycerin,
   44 % Triglycerin,
   19 % Tetraglycerin und
   10 % höher kondensierten Polyglycerinen
   mit einer C₂₂-Fettsäure im Gewichtsverhältnis 1:2 erhältlich ist und einen Veresterunsgrad von 40 % hat.

Die Viskosität dieser Emulsion liegt unmittelbar nach der Herstellung bei 660 mPa.s. Die Emulsion wurde nach der oben beschriebenen Methode als Entschäumer getestet. Folgende Ergebnisse wurden erhalten:

| T (°C) | R (%) |
|---|---|
| 30 | 15 |
| 50 | 14 |
| 60 | 31 |

## Patentansprüche

1. Entschäumer für die Papierindustrie auf der Basis von Öl-in-Wasser-Emulsionen, bei denen die Ölphase zu 5 bis 50 Gew.-% am Aufbau der Emulsion beteiligt ist, und
(a) einen Alkohol mit mindestens 12 C-Atomen, Fettsäureester aus Alkoholen mit mindestens 22 C-Atomen und C₁- bis C₃₆-Carbonsäuren, Destillationsrückstände, die bei der Herstellung von Alkoholen mit einer höheren Kohlenstoffzahl durch Oxosynthese oder nach dem Ziegler-Verfahren erhältlich und die gegebenenfalls alkoxyliert sind, Mischungen der genannten Verbindungen und/oder
(b) einen Fettsäureester von C₁₂- bis C₂₂-Carbonsäure mit ein- bis dreiwertigen C₁- bis C₁₈-Alkoholen und gegebenenfalls
(c) einen Kohlenwasserstoff mit einem Siedepunkt oberhalb von 200°C oder Fettsäure mit 12 bis 22 Kohlenstoffatomen
in Kombination mit
(d) 1 bis 80 Gew.-% Polyglycerinestern enthält, die durch mindestens 20%ige Veresterung von Polyglycerinmischungen aus
0 bis 10 Gew.-% Monoglycerin,
15 bis 40 Gew.-% Diglycerin,
30 bis 55 Gew.-% Triglycerin,
10 bis 25 Gew.-% Tetraglycerin,
0 bis 15 Gew.-% Pentanglycerin,
0 bis 10 Gew.-% Hexaglycerin und
0 bis 5 Gew.-% höherkondensierten Polyglycerinen
mit mindestens einer Fettsäure mit 12 bis 36 C-Atomen erhältlich sind.

2. Verwendung der Entschäumer nach Anspruch 1 zur Schaumbekämpfung bei der Zellstoffkochung, der Mahlung von Papierstoff, der Papierherstellung und der Dispergierung von Pigmenten für die Papierherstellung in Mengen von 0,02 bis 0,5 Gew.-Teilen pro 100 Gew.-Teile des schaumbildenden Mediums.

3. Verwendung der Entschäumer nach Anspruch 1 als Entlüfter in Papierstoffen in Mengen von 0,02 bis 0,5 Gew.-Teilen pro 100 Gew.-Teile der Papierstoffe.

## Claims

1. An antifoam for the paper industry, based on an oil-in-water emulsion, in which the oil phase accounts for from 5 to 50% by weight of the emulsion and contains
(a) an alcohol of not less than 12 carbon atoms, fatty esters of alcohols of not less than 22 carbon atoms and C₁-C₃₆-carboxylic acids, distillation residues which are obtainable in the preparation of alcohols having a relatively large number of carbon atoms by the oxo synthesis or by the Ziegler method and which may be alkoxylated, a mixture of the stated compounds or
(b) a fatty ester of a C₁₂-C₂₂-carboxylic acid with a monohydric to trihydric C₁-C₁₈-alcohol and, if required,
(c) a hydrocarbon having a boiling point above 200°C or a fatty acid of 12 to 22 carbon atoms,
in combination with
(d) from 1 to 80% by weight of polyglyceryl esters which are obtainable by not less than 20% esterification of a polyglycerol mixture of
from 0 to 10% by weight of monoglycerol,
from 15 to 40% by weight of diglycerol,
from 30 to 55% by weight of triglycerol,
from 10 to 25% by weight of tetraglycerol,
from 0 to 15% by weight of pentaglycerol,
from 0 to 10% by weight of hexaglycerol and
from 0 to 5% by weight of polyglycerols having higher degrees of condensation
with one or more fatty acids of 12 to 36 carbon atoms.

2. Use of an antifoam as claimed in claim 1, in amounts of from 0.02 to 0.5 part by weight per 100 parts by weight of the foam-forming medium, for preventing foam in pulp cooking, in the beating of paper stock, in papermaking and in the dispersing of pigments for papermaking.

3. Use of an antifoam as claimed in claim 1 as a deaerator in paper stocks, in amounts of from 0.02 to 0.5 part by weight per 100 parts by weight of paper stocks.

## Revendications

1. Agents antimousse pour l'industrie papetière à base d'émulsions huile-dans-eau, dans lesquelles l'oléophase participe pour jusqu'à 5 à 50% en poids à la constitution de l'émulsion et contient
(a) un alcool comportant au moins 12 atomes de carbone, des esters d'acides gras d'alcools comportant au moins 22 atomes de carbone et d'acides carboxyliques en C₁ à C₃₆, des résidus de distillation que l'on peut obtenir au cours de la préparation d'alcools à nombre d'atomes de carbone élevé par oxosynthèse ou selon le procédé Ziegler et qui sont éventuellement alcoxylés, des mélanges des composés précités et/ou
(b) un ester d'acide gras d'acides carboxyliques en C₁₂ à C₂₂ avec des alcools en C₁ à C₁₈ monohydroxylés à trihydroxylés et, éventuellement,
(c) un hydrocarbure possédant un point d'ébullition supérieur à 200°C, ou des acides gras comportant de 12 à 22 atomes de carbone,
en combinaison avec
(d) 1 à 80% en poids d'esters polyglycériniques, que l'on peut obtenir par l'estérification à au moins 20% de mélanges polyglycériniques constitués de
0 à 10% en poids de monoglycérine,
15 à 40% en poids de diglycérine,
30 à 55% en poids de triglycérine,
10 à 25% en poids de tétraglycérine,
0 à 15% en poids de pentaglycérine,
0 à 10% en poids d'hexaglycérine et
0 à 5% en poids de polyglycérines de condensation supérieure,
avec au moins un acide gras comportant de 12 à 36 atomes de carbone.

2. Utilisation des agents antimousse suivant la revendication 1 pour combattre la mousse au cours de la cuisson de la pâte à papier, du raffinage de la pâte, de la fabrication du papier et de la dispersion de pigments pour la fabrication de papier, en proportions de 0,02 à 0,5 partie en poids par 100 parties en poids du milieu formateur de mousse.

3. Utilisation des agents antimousse suivant la revendication 1, à titre d'agents de désaération de pâtes à papier, en proportions de 0,02 à 0,5 partie en poids par 100 parties en poids de la pâte à papier.
